# EUROPEAN PATENT APPLICATION

(11) **EP 4 686 190 A1**
(43) Date of publication of application: **28.01.2026**
(21) Application number: 25190627.7
(22) Date of filing: 21.07.2025
(51) Int. Cl.: H04N 5/222, G02B 27/64, G06F 3/14, H04N 23/68, H04N 23/90

(54) **IMAGE PROCESSING APPARATUS, IMAGE PROCESSING METHOD, AND COMPUTER PROGRAM**

(30) Priority: 22.07.2024 JP 2024117233
(71) Applicant: CANON KABUSHIKI KAISHA, Tokyo 146-8501 (JP)
(72) Inventor: KOBAYASHI, Satoru, Tokyo, 146-8501 (JP); OGINO, Hiroshi, Tokyo, 146-8501 (JP); SUZUKI, Toshimasa, Tokyo, 146-8501 (JP); YAMASHITA, Gou, Tokyo, 146-8501 (JP); FURESAWA, Ayako, Tokyo, 146-8501 (JP)
(74) Representative: TBK

(57) **Abstract**

An image processing apparatus (130, 110) detects a position and orientation of an image capture apparatus (200) that captures an image of a subject with a video displayed on a display apparatus (310) as a background and generates a video to be displayed on the display apparatus (310) in accordance with the detected position and orientation. In a case where image stabilization in the image capture apparatus (200) is effective, the apparatus corrects the detected position and orientation such that motion in the video displayed on the display apparatus (310) reflects the image stabilization.

## Description

### TECHNICAL FIELD

The present disclosure relates to an image processing apparatus, an image processing method, and a computer program.

### BACKGROUND

Conventionally, visual effects (VFX) video is video obtained by combining live-action video and background video that are generated separately. In recent years, Japanese Patent No. 7190594 proposes a method (in-camera VFX) of directly capturing VFX video using a camera by displaying, in real time, background video corresponding to the viewpoint of a camera capturing an image of a real-world subject on a large-sized display apparatus arranged on the background of the real-world subject. In-camera VFX eliminates the need for the post-process of combining the background video.

Conventionally, in-camera VFX video is captured by a camera fixed to a large-sized tripod, a crane, or the like, and it is not necessary to consider image blur caused by camera motion. On the other hand, if the camera that captures in-camera VFX video is not fixed, image blur needs to be considered.

By activating an image stabilization function of the camera, image blur in live-action video can be reduced. However, there is no known technology for generating appropriate background video when the image stabilization function is activated.

### SUMMARY

One embodiment according to the present disclosure provides an image processing apparatus and an image processing method that can generate appropriate background video even when an image stabilization function is used in a camera that captures live-action video to be used for VFX video.

The present disclosure in its first aspect provides an image processing apparatus as specified in claim 1. Optional features are specified in claim 2 to 11.

The present disclosure in its second aspect provides an image processing method as specified in claim 12.

The present disclosure in its third aspect provides a computer program as specified in claim 13.

Features of the present disclosure will become apparent from the following description of embodiments with reference to the attached drawings. The following description of embodiments are described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a schematic diagram of a virtual studio system according to an embodiment.
FIG. 2 is a block diagram showing an example of a functional configuration of a camera shown in FIG. 1 and the connection relationship between devices.
FIG. 3 is a block diagram showing an example of a functional configuration of a viewpoint detection apparatus.
FIG. 4 is a block diagram showing an example of a functional configuration of a scene control apparatus.
FIG. 5 is a flowchart related to an image stabilization operation.
FIG. 6 is a flowchart related to a viewpoint detection operation.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### Overview of Virtual Studio System

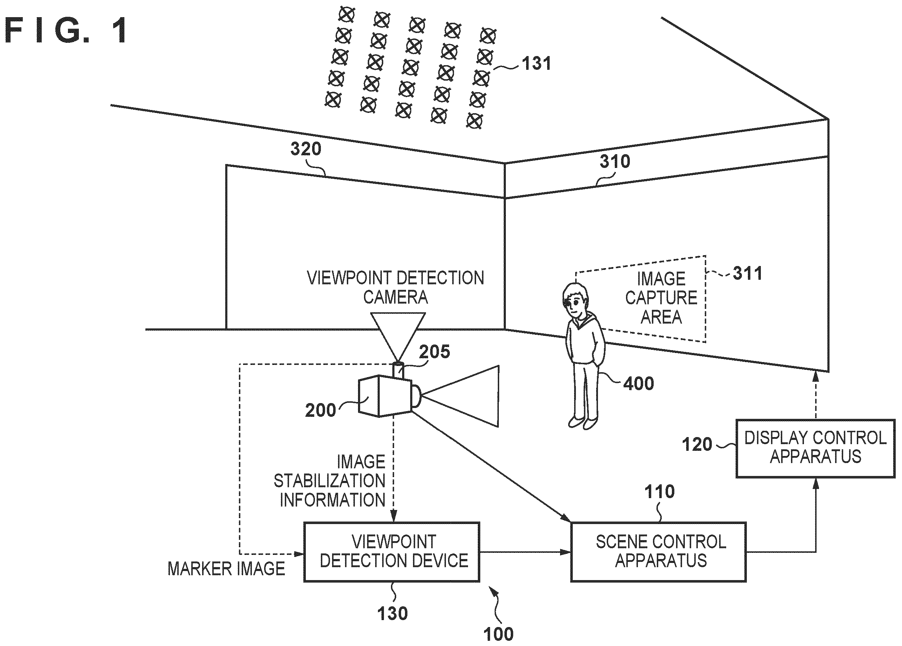

FIG. 1 is a schematic diagram of a virtual studio system according to an embodiment. A virtual studio is a studio that enables capturing in-camera VFX video and is equipped with a large-sized display apparatus for displaying background video and a device for detecting the position and orientation of a camera. The virtual studio and other devices necessary for capturing in-camera VFX video, including an image capture device such as a camera and a device for generating background video, are collectively called a virtual studio system. Note that the term "video" as used herein means a moving image, a signal representing a moving image, or data representing a moving image.

Large-sized display apparatuses 310 and 320, which are also called LED walls, for example, are provided on the wall surface of a virtual studio 100. The display apparatuses 310 and 320 may be movable. Here, an image capture area 311 of an image capture camera 200 for capturing in-camera VFX video is within the display screen of the display apparatus 310, and the background video is displayed on the display apparatus 310. Meanwhile, the display apparatus 320 is not subjected to image capture by the image capture camera 200, but is used to display, for example, a real-world subject 400, an image that is to appear on the display screen of the display apparatus 310. The display apparatus 320 is not essential.

Viewpoint detection markers 131, whose images are to be captured by a viewpoint detection camera 205, are provided on the ceiling of the virtual studio 100. For example, a plurality of viewpoint detection markers 131 are arranged in a specific pattern. The three-dimensional coordinates (position in the world coordinate system) of each marker are known.

The position and orientation of the image capture camera 200 are detected based on the image coordinates of the markers appearing in an image captured in a ceiling direction by the viewpoint detection camera 205, and the three-dimensional coordinates of the markers. Here, the position and orientation of the image capture camera 200 are detected as a combination of three-dimensional coordinates and rotation angles about three axes (tilt, pan, and roll) thereof.

The coordinate systems of the image capture camera 200 and the viewpoint detection camera 205 are Cartesian coordinate systems with an intersection of an optical axis and an imaging surface as an origin, an axis extending the optical axis, and two axes orthogonal to the optical axis. The two axes orthogonal to the optical axis are parallel to two respective non-opposing sides of the imaging surface.

Here, a reference orientation of the image capture camera 200 corresponds to a state where the optical axis of the image capture camera 200 is orthogonal to the gravity direction and the rotation angle about the optical axis of the image capture camera 200 is 0 degrees. The viewpoint detection camera 205 is attached to a rig or the like for holding the image capture camera 200 such that the optical axis of the viewpoint detection camera 205 faces vertically upward when the image capture camera 200 is in the reference orientation.

Note that, here, the position and orientation of the image capture camera 200 are detected based on a captured image of the markers whose three-dimensional coordinates are known. However, the position and orientation of the image capture camera 200 may be detected by any other known method, such as a method that does not use markers.

The image capture camera 200 records in-camera VFX video by capturing an image of the real-world subject 400 while using an image displayed on the display apparatus 310 as a background. The image capture area 311 is an example of an area subjected to image capture by the image capture camera 200 within the background video displayed by the display apparatus 310.

The viewpoint detection apparatus 130 detects a viewpoint (position and orientation) of the image capture camera 200 based on the coordinates of the viewpoint detection markers 131 provided on the ceiling and the positions of the viewpoint detection markers 131 in the image obtained by the viewpoint detection camera 205. It is assumed that, in the viewpoint detection apparatus 130, a three-dimensional positional deviation between the origin of the coordinate system of the image capture camera 200 and the origin of the coordinate system of the viewpoint detection camera 205 in the coordinate system of the virtual studio 100 is known through a calibration operation or the like. Accordingly, the viewpoint detection apparatus 130 can detect the viewpoint of the image capture camera 200 using the image obtained by the viewpoint detection camera 205.

As will be described later, when the image stabilization function of the image capture camera 200 is effective, the viewpoint detection apparatus 130 detects a viewpoint reflecting image stabilization in the image capture camera 200. The viewpoint detection apparatus 130 continuously detects the viewpoint of the image capture camera 200. The viewpoint detection apparatus 130 also continuously supplies information on the detected viewpoint to a scene control apparatus 110.

The scene control apparatus 110 renders a preset three-dimensional model of a virtual space with the viewpoint of the image capture camera 200 detected by the viewpoint detection apparatus 130, and generates a virtual space video at a predetermined frame rate. The scene control apparatus 110 generates a background video to be displayed on the display apparatus 310 based on the virtual space image. When generating a background video from the virtual space video, the scene control apparatus 110 applies coordinate conversion (deformation processing) to the background video in accordance with the angle between the image capture direction (optical axis direction) of the image capture camera 200 and the display surface of the display apparatus 310. The scene control apparatus 110 supplies the generated background video to a display control apparatus 120. The scene control apparatus 110 also supplies the image to be displayed on the display apparatus 320 to the display control apparatus 120. The image to be displayed on the display apparatus 320 may be a predetermined still image or a video consisting of frames with the same content as the predetermined still image.

The display control apparatus 120 causes the display apparatus 310 to display the background video at such timing that the image capture camera 200 can appropriately capture the background video. The display control apparatus 120 also causes the display apparatus 320 to display the video at the same timing as the display apparatus 310. The display control apparatus 120 controls the supply of the video in accordance with the configurations of the display apparatuses 310 and 320. For example, if the display apparatus 310 and/or 320 is constituted by a plurality of independent display panels, the display control apparatus 120 divides the video into areas to be displayed on respective display panel. Then, the display control apparatus 120 supplies the video of the area to be displayed on each individual display panel to that display panel.

Further, the image capture camera 200, the viewpoint detection apparatus 130, the scene control apparatus 110, and the display control apparatus 120 are supplied with a synchronization signal from a reference clock generator, which is also called a sync generator. Each apparatus controls its operation timing in accordance with the reference clock, thereby realizing, for example, synchronization between an image capture period of the image capture camera 200 and display periods of the display apparatuses 310 and 320. A technique for synchronizing operations between the apparatuses based on a reference clock is known, for example, as Generator Locking (GenLock), and the detailed description thereof is accordingly omitted.

Although it is envisioned herein that the real-world subject 400 is a human subject for convenience, there is no limitation to the type and number of real-world subjects.

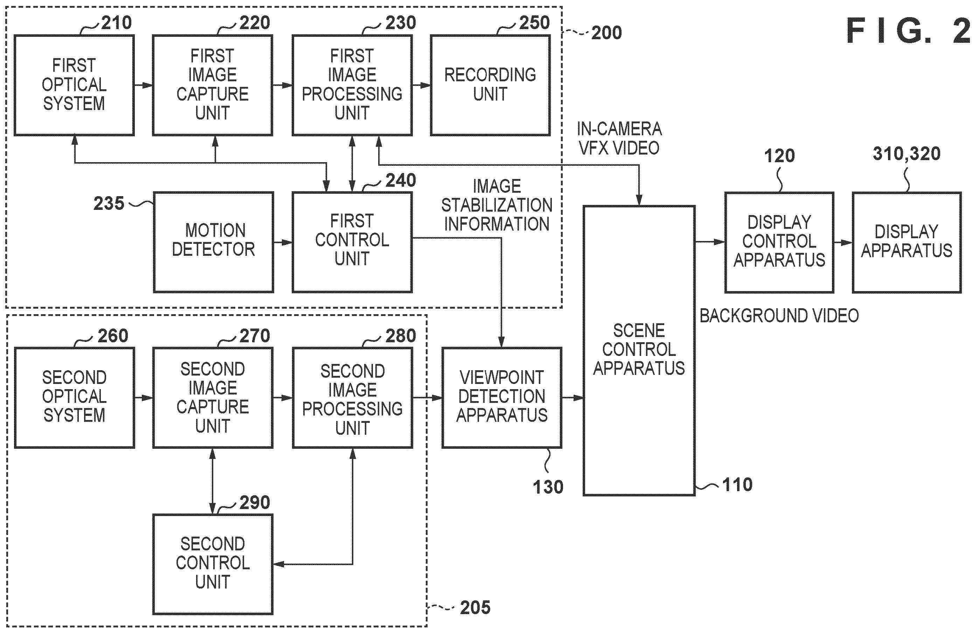

FIG. 2 is a block diagram showing the connection relationship between the apparatuses shown in FIG. 1 and an example of a functional configuration of the image capture camera 200 and the viewpoint detection camera 205. Hereinafter, unless otherwise stated, a first image capture unit 220 and a second image capture unit 270 each capture a moving image at a predetermined frame rate (e.g., 30 frames per second).

A first control unit 240 includes a processor (CPU, MPU, microprocessor etc.) capable of executing a program, a ROM, and a RAM. The first control unit 240 loads a program stored in the ROM into the RAM and executes it to control operations of each functional block of the image capture camera 200 and realize later-described operations of the image capture camera 200. Although not shown in the figure, the first control unit 240 is connected to each functional block of the image capture camera 200 in a communication-enabling manner.

A first optical system 210 is an optical system for capturing in-camera VFX video. When the first optical system 210 has an image stabilization function, the first optical system 210 has a lens for image stabilization (shift lens), as well as a movement mechanism and position detection mechanism for the shift lens. The movement mechanism for the shift lens is capable of moving the shift lens in a direction orthogonal to the optical axis of the first optical system 210. The position detection mechanism for the shift lens detects the position of the shift lens or a movement amount thereof from a reference position. The angle of view of the first optical system 210 may be variable. In the present embodiment, a situation is envisioned in which there are a few physical restrictions on the image capture direction of the image capture camera 200, as in the case of hand-held image capture. However, the image capture area 311 of the first optical system 210 is set to be not larger than the display area of the display apparatus 310.

The first image capture unit 220 has an image sensor and converts an optical image formed by the first optical system 210 into an analog image signal. The image sensor of the first image capture unit 220 may be, for example, a known CCD or CMOS color image sensor having a color filter of a primary color Bayer array. When the first image capture unit 220 has an image stabilization function, the first image capture unit 220 has a movement mechanism and position detection mechanism for the image sensor. The movement mechanism for the image sensor is capable of moving the image sensor in a direction orthogonal to the optical axis of the first optical system 210. The movement mechanism for the image sensor may also be capable of rotating the image sensor about the optical axis of the first optical system 210. The position detection mechanism for the image sensor detects the position of the image sensor or the movement amount thereof from a reference position. The analog image signal output by the first image capture unit 220 is supplied to a first image processing unit 230.

The first image processing unit 230 applies predetermined image processing to the analog image signal output by the first image capture unit 220 to generate signals and image data according to the use, and to obtain and/or generate various types of information. The first image processing unit 230 may be, for example, a dedicated hardware circuit such as an application specific integrated circuit (ASIC) designed to implement specific functions. Alternatively, the first image processing unit 230 may have a configuration in which a processor such as a digital signal processor (DSP) or a graphics processing unit (GPU) executes software to realize specific functions.

Image processing applied by the first image processing unit 230 includes, for example, pre-processing, color interpolation, corrections, detections, data processing, evaluation value calculation, and special effect processing.

Pre-processing may include A/D conversion, signal amplification, reference level adjustment, defective pixel correction, and the like.

Color interpolation is performed when the image sensor has a color filter, and is for interpolating values of color components not included in individual pixel data constituting the image data. Color interpolation is also called demosaicing.

Corrections may include white balance adjustment, tone correction, correction of image degradation caused by optical aberrations in the first optical system 210 (image recovery), correction of the effects of peripheral light attenuation in the first optical system 210, color correction, and the like.

Detections may include detection of a feature region, a region of a specific subject (e.g., face region or human body region) and its motion, person recognition processing, and the like.

Data processing may include region cropping (trimming), compositing, scaling, encoding and decoding, header information generation (data file generation), and the like. Generation of image data for display and image data for recording is also included in data processing.

Evaluation value calculation may include processing such as generation of a signal and an evaluation value used in automatic focus detection (AF) and generation of an evaluation value used in automatic exposure control (AE). The evaluation value used in AE is information related to the brightness of a captured scene, but the information related to the brightness of which part of the captured scene may differ depending on, for example, the set exposure mode. For example, information reflecting the brightness of the entire captured scene may be used in some cases, and information related to the brightness of a specific subject area may be used in other cases.

Special effect processing may include processing such as adding a blur effect, changing a color tone, re-lighting, and the like. Special effect processing also includes later-described processing for reflecting the influence of a light source.

Note that these are examples of processing that can be applied by the first image processing unit 230, and do not limit the processing applied by the first image processing unit 230. The first image processing unit 230 outputs obtained or generated information and data to a functional block corresponding to the use. The first image processing unit 230 outputs, for example, image data for recording to a recording unit 250, and outputs information related to the brightness of the captured scene to the first control unit 240. Also, the first image processing unit 230 outputs video data for display to the scene control apparatus 110.

The first control unit 240 can execute AE processing to determine exposure conditions based on the information related to the brightness of the captured scene obtained from the first image processing unit 230, and control operations of the first image capture unit 220 in accordance with the determined exposure conditions. The first control unit 240 can determine the exposure condition such that, for example, the entire captured scene is properly exposed, or such that a partial region included in the captured scene (e.g., real-world subject area) is properly exposed.

Note that, in general, the exposure conditions are determined by a combination of aperture (f-number), shutter speed (exposure time), and image sensor sensitivity (ISO). Thus, the first control unit 240 can determine a combination of values of these three parameters as an image capture condition for achieving proper exposure. However, if the aperture and/or exposure time is changed while capturing a moving image, the depth of field may change and/or the moving distance of a moving subject between frames may changes. For this reason, in the AE processing in this embodiment, basically, the image sensor sensitivity is determined without changing the aperture and shutter speed.

Note that the focal distance of the first optical system 210 can be automatically adjusted by the first control unit 240 executing AF processing based on the evaluation value generated by the first image processing unit 230.

A motion detector 235 is a sensor for detecting motion of the image capture camera 200. The motion detector 235 may be a known six-axis sensor for detecting the acceleration of the image capture camera 200 in each axial direction in its coordinate system and the angular velocity thereof about each axis. The motion detector 235 supplies a detection value to the first control unit 240 in a predetermined period.

In the present embodiment, the image capture camera 200 has an optical and/or electronic image stabilization function. The optical image stabilization function is realized by the first control unit 240 controlling the shift lens included in the first optical system 210 and/or the movement mechanism for the image sensor included in the first image capture unit 220, based on the motion detected by the motion detector 235. The electronic image stabilization function is realized by the first control unit 240 controlling the position for cropping a frame image obtained by the first image capture unit 220, based on the motion detected by the motion detector 235.

The first control unit 240 calculates an image stabilization amount corresponding to the image stabilization method, the type of an image stabilizer (shift lens and/or image sensor), or the like, based on the motion detected by the motion detector 235. Then, the first control unit 240 controls the position of the image stabilizer and the position for cropping the frame image in accordance with the calculated image stabilization amount.

A second control unit 290 includes a processor (CPU, MPU, microprocessor etc.) capable of executing a program, a ROM, and a RAM. The second control unit 290 loads a program stored in the ROM into the RAM and executes it to control operations of each functional block of the viewpoint detection camera 205 and realize later-described operations of the viewpoint detection camera 205. Although not shown in FIG. 2, the second control unit 290 is connected to each functional block of the viewpoint detection camera 205 in a communication-enabling manner.

In the present embodiment, the viewpoint detection markers 131 are disposed on the ceiling of the virtual studio 100. The viewpoint detection camera 205 is attached to the image capture camera 200 such that the optical axis of the second optical system 260 faces vertically upward when the image capture camera 200 is in the reference orientation. The angle of view of the second optical system may be fixed or variable.

The second image capture unit 270 has an image sensor and converts an optical image formed by the second optical system 260 into an analog image signal. As for the image for viewpoint detection, it is sufficient that the image coordinates of the viewpoint detection markers 131 can be obtained therefrom, and thus the image sensor may be a monochrome image sensor. Further, the number of pixels in the image sensor of the second image capture unit 270 may be smaller than the number of pixels in the image sensor of the first image capture unit 220.

The second image processing unit 280 applies image processing to the analog image signal output by the second image capture unit 270 to generate a video for detecting the viewpoint of the image capture camera 200 (referred to as the viewpoint detection video hereinafter). The second image processing unit 280 may have the same functions as the first image processing unit 230, or may have only those functions of the first image processing unit 230 that are required to generate the viewpoint detection video. The viewpoint detection video may be a video to be displayed similar to that generated by the first image processing unit 230. When the second image capture unit 270 outputs a monochrome video, the second image processing unit may generate a viewpoint detection video obtained by A/D converting the monochrome image. The second image processing unit 280 outputs the viewpoint detection video to the viewpoint detection apparatus 130.

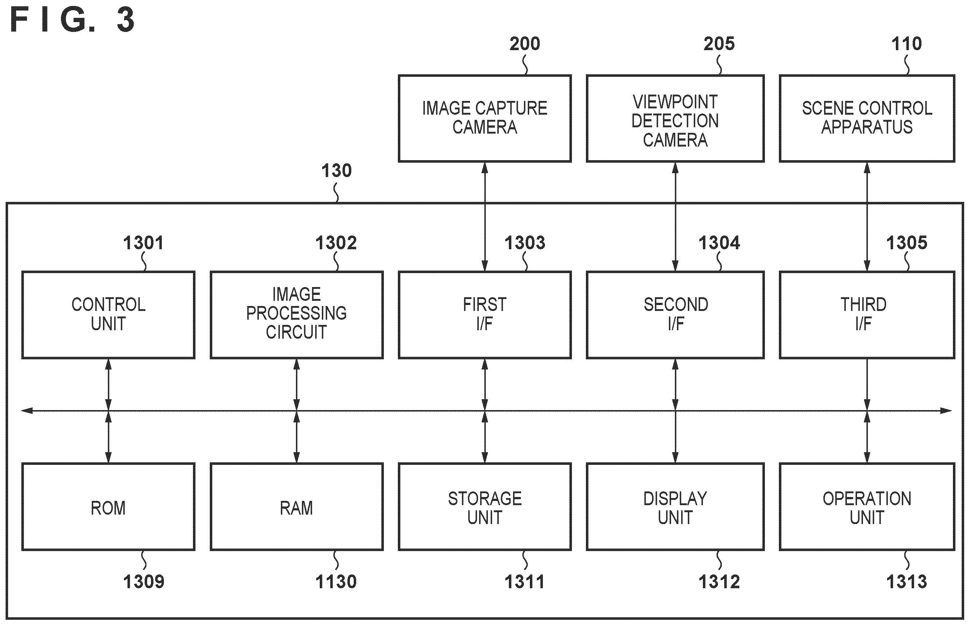

FIG. 3 is a block diagram showing an example of a functional configuration of the viewpoint detection apparatus 130. The viewpoint detection apparatus 130 can be implemented using, for example, a computer device.

A control unit 1301 is, for example, a CPU, and realizes functions of the viewpoint detection apparatus 130 by loading one or more application programs stored in a ROM 1308 into a RAM 1309 and executing them. Note that the control unit 1301 controls the operation timing of the viewpoint detection apparatus 130 in accordance with a synchronization signal supplied from a reference clock generator.

The image processing circuit 1302 is, for example, a graphic board equipped with a GPU. The image processing circuit 1302 can rapidly perform image processing, such as processing for detecting the image coordinates of the viewpoint detection markers 113 in the viewpoint detection video supplied from the viewpoint detection camera 205.

A first I/F 1303 to a third I/F 1305 are communication interfaces for connecting external devices. In the present embodiment, the image capture camera 200 is connected to the first I/F 1303, the viewpoint detection camera 205 is connected to the second I/F 1304, and the scene control apparatus 110 is connected to the third I/F 1305. Note that the first I/F 1303 to the third I/F 1305 conform to a standard corresponding to the types of external apparatuses to be connected and the types of signals to be communicated. For convenience, the viewpoint detection apparatus 130 and each external apparatus are connected via one I/F in FIG. 3, but they may be connected via a plurality of I/Fs. Note that the viewpoint detection apparatus 130 may have four or more communication interfaces for connection with external apparatuses.

The control unit 1301 obtains, as image stabilization information, at least one of motion data, an image stabilization amount, and the position of the image stabilizer from the image capture camera 200 via the first I/F 1303. The control unit 1301 also obtains the viewpoint detection video from the viewpoint detection camera 205 via the second I/F 1304. The control unit 1301 outputs the viewpoint (position and orientation) of the image capture camera 200 to the scene control apparatus 110 via the third I/F 1304.

A ROM 1309 is, for example, an electrically rewritable nonvolatile memory. The ROM 1309 stores some of the programs to be executed by the control unit 1301 (BIOS, bootstrap loader, firmware), setting values for the viewpoint detection apparatus 130, and the like. The ROM 1309 also stores a gap between the origin of the coordinate system of the image capture camera 200 and the origin of the coordinate system of the viewpoint detection camera 205 (i.e., a difference between their three-dimensional coordinates in the coordinate system of the virtual studio 100). The control unit 1301 executes a calibration application to detect the gap between the origins of the coordinate systems when, for example, the viewpoint detection camera 205 is installed, and stores the detected gap in the ROM 1309. The ROM 1309 also stores the three-dimensional position of each viewpoint detection marker 113 (the three-dimensional coordinates thereof in the coordinate system of the virtual studio 100).

The RAM 1310 is used as a main memory for the control unit 1301, a working memory for an image processing circuit 1302, and a video memory for a display unit 1312.

A storage unit 1311 is a large-capacity storage device such as a hard disk or SSD. The storage unit 1311 stores operating software (OS), application programs, user data, and the like. The storage unit 1311 stores applications used in viewpoint position detection, such as:
- an application for calculating the viewpoint (position and orientation) of the image capture camera 200 from the viewpoint detection video supplied from the viewpoint detection camera 205 and the three-dimensional positions of the viewpoint detection markers 113 stored in the ROM 1309;
- a program for controlling the operations of the viewpoint detection camera 205;
- an application for calibrating the viewpoint detection apparatus 130; and
- an application for registering the positions of the viewpoint detection markers 113.

Note that they are examples only, and not all of them are necessarily essential. Other applications may also be stored.

The control unit 1301 executes necessary applications as required using the image processing circuit 1302, detects the viewpoint of the image capture camera 200, for example, for each frame of the viewpoint detection video, and supplies the detected viewpoint to the scene control apparatus 110. As mentioned above, the viewpoint of the image capture camera 200 is detected as a combination of the three-dimensional coordinates of the origin of the coordinate system of the image capture camera 200 and the rotation angle about each axis (tilt, pan, roll) of the coordinate system of the image capture camera 200.

The display unit 1312 is, for example, a liquid crystal display device. The display unit 1312 may alternatively be a touchscreen display. The display unit 1312 displays the applications used in viewpoint position detection, a GUI provided by the OS, and the like.

An operation unit 1313 includes a plurality of input devices that can be operated by a user, such as a keyboard, a mouse, and a touchpad. If the display unit 1312 is a touchscreen display, a touchscreen is a constituent element of the operation unit 1313.

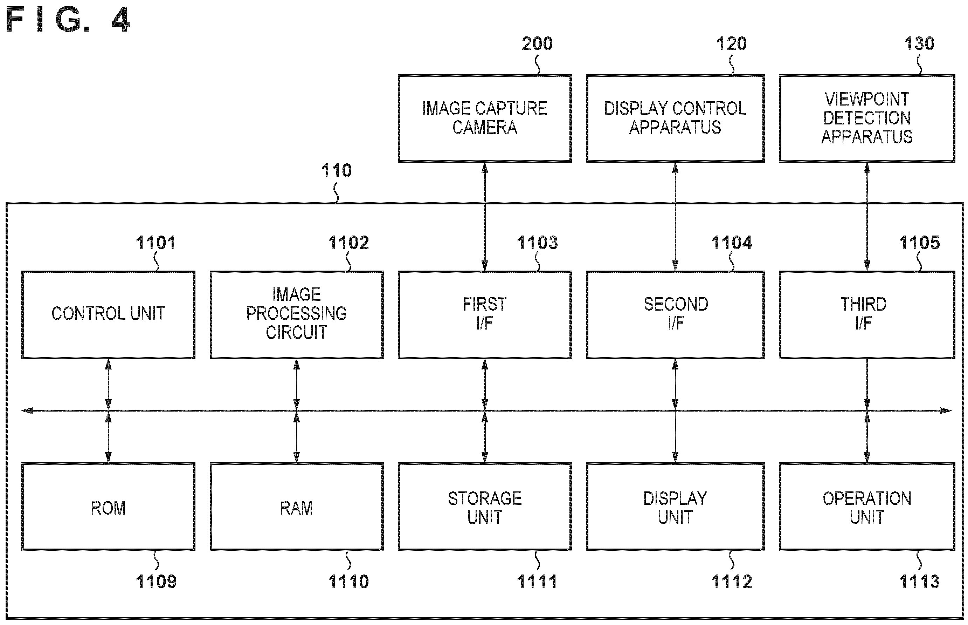

FIG. 4 is a block diagram showing an example of a functional configuration of the scene control apparatus 110. The scene control apparatus 110 can be implemented using, for example, a computer device.

A control unit 1101 is, for example, a CPU, and realizes the functions of the scene control apparatus 110 by loading one or more application programs stored in a ROM 1108 into a RAM 1110 and executing them. Note that the control unit 1101 controls the operation timing of the scene control apparatus 110 in accordance with a synchronization signal supplied from the reference clock generator.

The image processing circuit 1102 is, for example, a graphic board equipped with a GPU. An image processing circuit 1102 can rapidly perform image processing, such as CG rendering using a three-dimensional model and the viewpoint of a virtual camera. The image processing circuit 1102 is, for example, capable of generating one frame of a background video in a time shorter than or equal to the frame period of in-camera VFX video.

A first I/F 1303 to a third I/F 1305 are communication interfaces for connecting external devices. In the present embodiment, the image capture camera 200 is connected to the first I/F 1103, the display control apparatus 120 is connected to the second I/F 1104, and the viewpoint detection apparatus 130 is connected to the third I/F 1105. Note that the first I/F 1103 to the third I/F 1105 conform to a standard corresponding to the types of external apparatuses to be connected and the types of signals to be communicated. For convenience, the scene control apparatus 110 and each external apparatus are connected via one I/F in the figure, but they may be connected via a plurality of I/Fs. Note that the scene control apparatus 110 may have four or more communication interfaces for connection with external apparatuses.

The control unit 1101 obtains captured image data and information related to the brightness of a captured scene from the image capture camera 200 via the first I/F 1103. The control unit 1101 also obtains information related to the viewpoint of the image capture camera 200 from the viewpoint detection apparatus 130 by communication through the third I/F 1105. The control unit 1101 outputs image data for display (background video data) to the display control apparatus via the second I/F 1104.

The ROM 1109 is, for example, an electrically rewritable nonvolatile memory. The ROM 1109 stores some of the programs to be executed by the control unit 1101 (BIOS, bootstrap loader, firmware), setting values for the scene control apparatus 110, and the like.

The RAM 1110 is used as a main memory for the control unit 1101, a working memory for the image processing circuit 1102, and a video memory for a display unit 1112.

A storage unit 1111 is a large-capacity storage device such as a hard disk or SSD. The storage unit 1111 stores operating software (OS), application programs, user data, and the like. The storage unit 1111 also stores an application program for generating a background video corresponding to the viewpoint of the image capture camera 200 (e.g., game engine application), and data necessary for generating a background video (a 3D model, texture, etc. of a virtual space).

The display unit 1112 is, for example, a liquid crystal display device. The display unit 1112 may alternatively be a touchscreen display. The display unit 1112 displays a scene control application, a background video generation application, (e.g., game engine application), a GUI provided by the OS, and the like.

An operation unit 1113 includes a plurality of input devices that can be operated by a user, such as a keyboard, a mouse, and a touchpad. If the display unit 1112 is a touchscreen display, a touchscreen is a constituent element of the operation unit 1113.

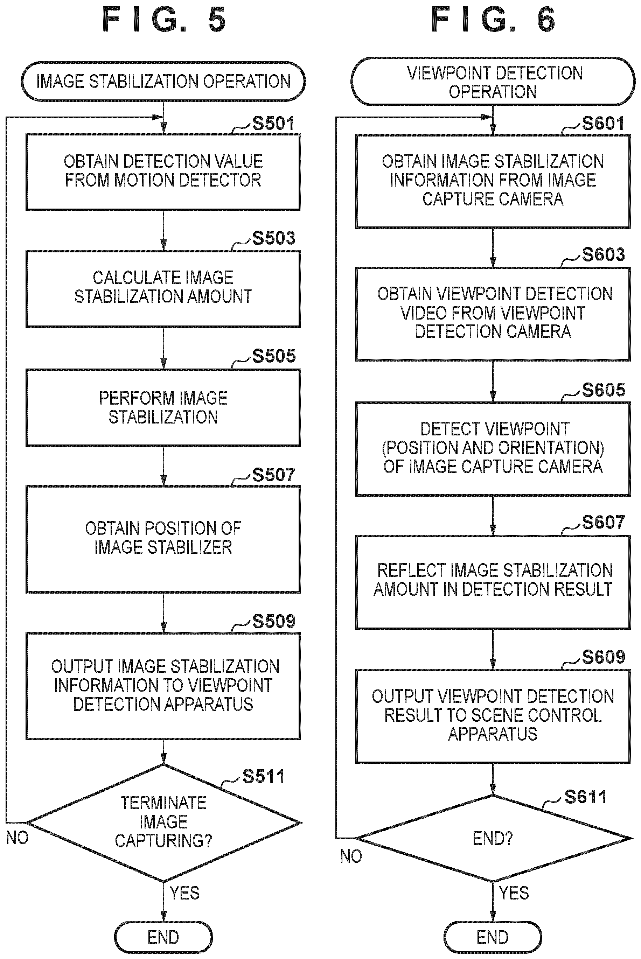

Next, an image stabilization operation performed by the first control unit 240 is described with reference to the flowchart shown in FIG. 5. The image stabilization operation is carried out by the first control unit 240 executing a program. The image stabilization operation is performed when the image stabilization is effective in the image capture camera 200. Enabling or disabling the image stabilization may be user-configurable or may be automatically determined by the image capture camera 200 (first control unit 240) in accordance with one or more predetermined conditions.

Here, it is assumed that the motion detector 235 continuously supplies a detection value indicating the motion of the image capture camera 200 to the first control unit 240. It is also assumed that the image capture camera 200 is capturing a moving image. Further, it is assumed that when executing optical image stabilization, the first control unit 240 continuously obtains position information regarding the image stabilizer (shift lens and image sensor). Note that optical image stabilization and electronic image stabilization are not exclusive, but may be used in combination.

In step S501, the first control unit 240 obtains a motion detection value supplied from the motion detector 235. The first control unit 240 stores the obtained detection value in the RAM. The RAM stores detection values supplied during the latest predetermined period.

In step S503, the first control unit 240 calculates an image stabilization amount using the detection value obtained in step S501. The first control unit 240 calculates an image stabilization amount corresponding to the image stabilization method (optical and/or electrical), and, in the case of an optical method, the image stabilizer to be used (one or both of the shift lens and the image sensor). The first control unit 240 can calculate the image stabilization amount by using any known method. Thus, the detailed description of the calculation of the image stabilization amount is omitted.

When optical image stabilization is performed, the image stabilization amount includes, for example, a combination of the direction and the amount of movement of the image stabilizer. When electronic image stabilization is performed, the image stabilization amount includes, for example, the image coordinates (absolute coordinates or amount of change) of a plurality of vertexes specifying a cropping position of a frame image.

In step S505, the first control unit 240 performs image stabilization based on the image stabilization amount calculated in step S503. That is, the first control unit 240 moves the image stabilizer and/or the cropping position of the frame image based on the image stabilization amount.

In step S507, the first control unit 240 calculates an actual movement amount of the image stabilizer moved in step S505. After giving an instruction to move the image stabilizer in step S505, the first control unit 240 obtains the actual movement amount of the image stabilizer through the position detection mechanism. Note that if only electronic image stabilization is performed in step S505, step S507 may be skipped.

In step S509, the first control unit 240 outputs image stabilization information to the viewpoint detection apparatus 130. The image stabilization information may be any one of:
- the detection value of the motion of the image capture camera 200 obtained in step S501;
- the image stabilization amount calculated in step S503; and
- the position of the image stabilizer obtained in step S507.

From the standpoint of improving the accuracy of detecting the viewpoint of the image capture camera 200 in the viewpoint detection apparatus 130, the position of the image stabilizer is most preferred, and the image stabilization amount is next preferred. This is because the position of the image stabilizer is closest to the actual image stabilization amount.

Note that when there are a plurality of image stabilization amounts, such as when both optical and electronic image stabilization is performed, or when optical image stabilization is performed using both the shift lens and the image sensor, the image stabilization amount output in step S509 is a combined value of the plurality of image stabilization amounts.

In step S511, the first control unit 240 determines whether or not to terminate image capture with the image capture camera 200. If it is determined that image capture is to be terminated, the first control unit 240 terminates the image stabilization operation shown in FIG. 5. If not, the first control unit 240 repeats the processing from step S501.

Next, the viewpoint detection operation performed by the viewpoint detection apparatus 130 is described with reference to the flowchart shown in FIG. 6. The viewpoint detection operation is performed by the control unit 1301 executing a program, at least while the viewpoint detection video is supplied from the viewpoint detection camera 205.

In step S601, the control unit 1301 obtains image stabilization information from the image capture camera 200 through the first I/F 1303 and stores it in the RAM. The RAM stores image stabilization information obtained during the latest predetermined period.

In step S603, the control unit 1301 obtains a predetermined amount (e.g., one frame) of the viewpoint detection video from the viewpoint detection camera 205 through the second I/F 1304 and stores it in the RAM.

In step S605, the control unit 1301 detects the viewpoint (position and orientation) of the image capture camera 200 from the three-dimensional positions of the viewpoint detection markers 113 appearing in the viewpoint detection video. The control unit 1301 can detect the position and orientation of the camera that has captured the images of the markers based on the video of the markers, by any known method. The control unit 1301 stores the detected position and orientation in the RAM.

In step S607, the control unit 1301 corrects the position and orientation detected in step S605 using the image stabilization information obtained in step S601. This is equivalent to reflecting, in the position and orientation detected in step S605, a difference caused by the image stabilization between the motion of the in-camera VFX video and the motion of the image capture camera 200, and applying virtual image stabilization to the position and orientation detected in step S605. The difference caused by the image stabilization between the motion of the in-camera VFX video and the motion of the image capture camera 200 may make the motion of the background video generated based on the motion of the image capture camera 200 unnatural, resulting in lower quality of the in-camera VFX video.

For this reason, the control unit 1301 corrects the value of the position and orientation detected in step S605 so as to reduce the amount of change in the position and orientation of the image capture camera 200, based on the image stabilization information obtained in step S601. The control unit 1301 stores the corrected position and orientation in the RAM.

If the image stabilization amount is small and affects the detected position and orientation only slightly, for example, if the image stabilization amount is smaller than a predetermined threshold, the position and orientation detected in step S605 need not be corrected. The threshold may be obtained experimentally or determined based on the resolution of viewpoint detection (smallest unit of detectable coordinates and orientation) by the viewpoint detection system (the viewpoint detection camera 205 and viewpoint detection apparatus 130). If the amount of change in the position and orientation due to the image stabilization is smaller than the resolution of viewpoint detection, the detected position and orientation need not be corrected.

In step S609, the control unit 1301 outputs the position and orientation corrected in step S607 to the scene control apparatus 110 via the third I/F 1305. The scene control apparatus 110 generates a background video using the corrected position and orientation, thereby reflecting the image stabilization performed by the image capture camera 200 in the motion in the background video.

In step S611, the control unit 1301 determines whether or not to terminate the viewpoint detection operation. If it is determined that the viewpoint detection operation is to be terminated, the control unit 1301 terminates the viewpoint detection operation shown in FIG. 6. If not, the control unit 1301 repeats the processing from step S601.

In the present embodiment, when the image stabilization is effective in the image capture camera 200 that obtains in-camera VFX video, the influence of the motion of the image capture camera 200 on the in-camera VFX video that is suppressed by the image stabilization is reflected in the result of detecting the viewpoint of the image capture camera 200. As a result, the image-stabilized in-camera VFX video image can suppress the unnaturalness caused by a mismatch of shake between a background image portion and a real-world subject portion.

According to one embodiment of the present disclosure, it is possible to provide an image processing apparatus and an image processing method that can generate an appropriate background video even when an image stabilization function is effective in a camera that captures live-action video to be used in VFX video.

### Other Embodiments

In the description of the above embodiment, the viewpoint detection apparatus 130, the scene control apparatus 110, and the display control apparatus 120 are separate apparatuses. Alternatively, the scene control apparatus 110 may have the functions of the display control apparatus 120 and the viewpoint detection apparatus 130.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image processing apparatus (130, 110) comprising:
detection means (130) for detecting a position and orientation of an image capture apparatus (200) that captures an image of a subject with a video displayed on a display apparatus (310) as a background; and
generation means (110) for generating a video to be displayed on the display apparatus (310) in accordance with the detected position and orientation,
wherein, in a case where image stabilization in the image capture apparatus (200) is effective, the detection means (130) corrects the detected position and orientation such that motion in the video displayed on the display apparatus (310) reflects the image stabilization.

2. The image processing apparatus according to claim 1,
wherein the detection means (130) corrects the detected position and orientation based on an image stabilization amount or a position of an image stabilizer obtained from the image capture apparatus (200).

3. The image processing apparatus according to claim 2,
wherein the image stabilizer is one or both of a shift lens and an image sensor.

4. The image processing apparatus according to claim 1,
wherein the detection means (130) corrects the detected position and orientation based on information related to motion of the image capture apparatus obtained from the image capture apparatus (200).

5. The image processing apparatus according to claim 1,
wherein the detection means (130) calculates an image stabilization amount in the image capture apparatus (200) based on information related to motion of the image capture apparatus (200) obtained from the image capture apparatus (200), and corrects the detected position and orientation based on the image stabilization amount.

6. The image processing apparatus according to claim 5,
wherein the detection means (130) does not correct the detected position and orientation in a case where the image stabilization amount is smaller than a threshold.

7. The image processing apparatus according to claim 6,
wherein the threshold is determined based on a detection resolution of the detection means (130).

8. The image processing apparatus according to any one of claims 1 to 7,
wherein the detection means (130) detects the position and orientation using a member (205) attached to the image capture apparatus.

9. The image processing apparatus according to claim 8,
wherein the member (205) is a second image capture apparatus that captures an image of an area in which a marker (131) whose three-dimensional position is known is arranged, and the detection means (130) detects the position and orientation using the image captured by the second image capture apparatus (205).

10. The image processing apparatus according to claim 9, wherein the second image capture apparatus (205) does not perform image stabilization.

11. The image processing apparatus according to any one of claims 1 to 10,
wherein the generation means (110) generates the video by capturing a virtual space using a virtual camera based on the detected position and orientation.

12. An image processing method comprising:
detecting (S605) a position and orientation of an image capture apparatus that captures an image of a subject with a video displayed on a display apparatus as a background; and
generating (S609) a video to be displayed on the display apparatus in accordance with the detected position and orientation,
wherein, in a case where image stabilization in the image capture apparatus is effective, the detecting (S605) includes correcting (S607) the detected position and orientation such that motion in the video displayed on the display apparatus reflects the image stabilization.

13. A computer program comprising instructions which, when the program is executed by a computer, cause the computer to carry out the image processing method of claim 12.
